# EUROPEAN PATENT SPECIFICATION

(11) **EP 2 982 556 B1**
(45) Date of publication and mention of the grant of the patent: **07.07.2021**
(21) Application number: 14778136.3
(22) Date of filing: 27.03.2014
(51) Int. Cl.: B60T 13/38, F16D 65/28, F16D 127/02

(54) **BRAKE CYLINDER DEVICE AND BRAKE DEVICE**
BREMSZYLINDERVORRICHTUNG UND BREMSVORRICHTUNG
DISPOSITIF DE CYLINDRE DE FREIN ET DISPOSITIF DE FREIN

(30) Priority: 03.04.2013 JP 2013077431
(43) Date of publication of application: 10.02.2016
(73) Proprietor: Nabtesco Corporation, Tokyo 102-0093 (JP)
(72) Inventor: ASANO,Yoshio, Kobe-shi Hyogo 651-2271 (JP); OIE,Hideyuki, Kobe-shi Hyogo 651-2271 (JP)
(74) Representative: Grünecker Patent- und Rechtsanwälte PartG mbB
(86) International application number: PCT/JP2014/058709
(87) International publication number: WO 2014/162960

(56) References cited:
- EP-A1- 2 378 154
- JP-A- 2010 164 193
- JP-U- H0 199 876
- JP-U- H0 423 886
- US-A- 3 889 576
- US-A- 4 550 811
- US-A- 4 781 105

## Description

The present invention relates to a brake cylinder device including a parking spring brake mechanism used to park a vehicle and a brake device including the brake cylinder device.

A conventional brake cylinder device includes a parking spring brake mechanism which is used to park a vehicle and is configured so that the brake force of the parking spring brake is manually released. For example, patent document 1 describes a brake cylinder device including a locking lever (latch member) having one end that forms an eye nut (pull ring) projecting out of a cylinder body. The other end of the latch member includes an edge that is engaged with latch end of a sleeve member in a clutch member that serves as a transmission mechanism. This restricts movement of a rod relative to a second piston when a spring brake means is actuated. The latch membe is configured to disengage the edge of the latch member from the latch edge of the sleeve member when the pull ring is manually pulled in the radial direction of the cylinder body toward the outer side of the cylinder body. Accordingly, the brake cylinder device of patent document 1 is adapted to permit movement of a rod of a regular brake means relative to the spring brake member, unlock the spring brake means from the latch member, and allow actuation of the spring brake means.

Further, Figs. 8 to 10 of patent document 1 disclose a brake cylinder device including a slide pin (latch lock member). The pull ring is pulled to unlock the spring brake means and then released. The latch lock member stops the latch member so that the latch member does not return to its original position and lock the spring brake means. In the brake cylinder device, the latch lock member is accommodated in an inner tube (guide portion) so as to be slidable in the axial direction. The latch lock member includes an inclined surface that is engaged with an inclined surface (projection) of the latch member. When the pull ring is pulled, the projection of the latch member is disengaged from the inclined surface of the latch lock member, and the latch lock member falls. Accordingly, even when the pull ring is released after unlocking the spring brake means, the latch lock member restricts advancement of the latch member and keeps the spring brake means unlocked.

Patent Document 1: Japanese Laid-Open Patent Publication No. 2001-206213

In the above-described structure, when the latch lock member is rotated about the advancing/retracting direction of the latch lock member for one reason or another, the inclined portion of the latch lock member would not engage the projection of the latch member. As a result, the latch member would not function normally.

Patent Document 2: European Patent Application 2 378 154 A1 discloses a brake cylinder device that can prevent an unintentional release of a braking force of a spring brake means due to disengagement of meshing portions of a clutch mechanism. A brake cylinder device 1 includes a service brake means 11 including a first piston 24, a spring brake means 12 including a second piston 27, a clutch mechanism 14, a spindle 15, and a spindle holding means 16. The spindle 15 is connected to the first piston 24 so as to be rotatable about an axial direction. The clutch mechanism 14 includes a nut member 33 that is supported rotatably bv the second piston 27 and screwed to the spindle 15, and connects or disconnects the spindle 15 and the second piston 27. The spindle holding means 16 restricts the rotatable angle of the spindle 15, and holds the spindle 15 with respect to the first piston by urging the spindle 15 in a direction that is opposite to a rotation direction in which the nut member 33 is deeply screwed to the spindle 15.

Accordingly, it is an object of the present invention is to ensure normal operation of the latch member.
(1) To achieve the above object, one aspect of the present invention is a brake cylinder device including a parking spring brake mechanism activated when parking a vehicle. The parking spring brake mechanism includes a cylinder, a piston accommodated in the cylinder, and a parking spring that biases the piston so that the piston moves in a brake actuation direction. A brake force transmission transmits the biasing force of the piston to a brake output portion, which pushes a pushed portion of a braking subject. A clutch mechanism is configured to transmit the biasing force of the piston to the brake force transmission or interrupt the transmission of the biasing force of the piston to the brake force transmission. A latch member is configured so that a distal end is engaged with the clutch mechanism when the latch member is in an advanced state advanced toward the clutch mechanism and so that the distal end is disengaged from the clutch mechanism when the latch member is in a retracted state retracted from the clutch mechanism. The latch member restricts displacement of the brake force transmission relative to the piston in the advanced state when the parking spring brake mechanism is activated and permits displacement of the brake force transmission relative to the piston in the retracted state when the parking spring brake mechanism is activated. A latch lock member includes an inclined portion arranged to contact a distal end of a projection formed on the latch member projecting in an advancing direction of the latch member. The latch lock member advances in the brake actuation direction when the latch member shifts to the retracted state and pushes the latch member in a retracting direction of the latch member with the inclined portion. A guide portion guides the latch lock member and allows the latch lock member to advance and retract. A rotation restriction portion restricts rotation of the latch lock member about the advancing/retracting direction of the latch lock member relative to the guide portion.
   In this configuration, a brake force is generated by the parking spring brake if the parking spring brake mechanism is activated when the latch member is in the advanced state. The brake force generated by the parking spring brake is released if the latch member is in the retracted state when the parking spring brake mechanism is activated. That is, in this configuration, the brake force generated by the parking spring brake can be manually released by the latch member.
   Further, in this configuration, the latch lock member is allowed to be movable forward and backward in the brake actuation direction. When the latch member is in the retracted state, the latch lock member advances in the brake actuation direction so that the inclined portion pushes the latch member in the retracting direction of the latch member. That is, after the parking spring brake force is manually released, the brake force released state is maintained by the latch lock member.
   In this configuration, the rotation restriction portion restricts the latch lock member from rotating about the advancing/retracting direction of the latch lock member. This limits situations in which the latch lock member is rotated due to one reason or another such that the projection of the latch member cannot engage the inclined portion of the latch lock member, and thereby avoids a situation in which the latch member cannot function properly.
   Accordingly, this configuration ensures normal operation of the latch member.
(2) Preferably, the brake cylinder device further includes a separation restriction portion that restricts separation of the latch lock member from the guide portion.
   This configuration restricts rotation of the latch lock member that would be caused by separation of the latch lock member from the guide portion. Accordingly, normal operation of the latch member may be further ensured.
(3) Further preferably, the separation restriction portion is arranged to overlap the latch lock member in the advancing/retracting direction of the latch lock member.
   This configuration restricts the separation restriction portion and the latch lock member from being arranged in series in the advancing/retracting direction of the latch lock member. Accordingly, the brake cylinder device may be reduced in size in the advancing/retracting direction of the latch lock member.
(4) Preferably, the brake cylinder device further includes a first position adjustment spring that biases the clutch mechanism relative to the cylinder in a direction opposite to the brake actuation direction. A second position adjustment spring biases the clutch mechanism relative to the piston in the brake actuation direction. A spring seat includes a reception portion, which receives an end of the second position adjustment spring at a side biasing the clutch mechanism, and an extension portion, which serves as the separation restriction portion and extends from the reception portion opposing an end of the latch lock member at a retracting direction side.
   For example, if the piston includes the separation restriction portion, the latch lock member may be pushed by the separation restriction portion when the piston advances in the brake actuation direction. That is, the latch lock member may be pushed when the latch lock member does not need to be pushed.
   In the above-described configuration, the extension portion of the spring seat that receives the second spring includes the separation restriction portion. This avoids situation in which the latch lock member is erroneously pushed by the piston when advanced. That is, in this configuration, the separation restriction portion is located at an appropriate position.
(5) Further, to solve the above problem, a further aspect of the present invention is a brake device including the brake cylinder device described in any one of the above paragraphs and a brake output portion that pushes a pushed portion of a braking subject with the biasing force of the piston of the brake cylinder device.

In this configuration, it is possible to provide the brake device in which the latch member functions normally.

The present invention ensures normal operation of the latch member.
Fig. 1 is a partially cross-sectional view showing a brake device according to a first embodiment of the invention.
Fig. 2 is a partially enlarged view of the brake device illustrated in Fig. 1 and shows a brake cylinder device of the brake device.
Fig. 3 is a partially enlarged view of the brake cylinder device illustrated in Fig. 2.
Fig. 4 is a partially enlarged view of Fig. 3 in the vicinity of a lock mechanism.
Fig. 5A is a front view illustrating the shape of a latch lock pin, and Fig. 5B is a top view of the latch lock pin.
Fig. 6 is a partial cross-sectional view of a brake device according to a second embodiment of the invention.
Fig. 7 is a partially enlarged view of the brake device illustrated in Fig. 6 and shows a brake cylinder device of the brake device.
Fig. 8 is a partially enlarged view of Fig. 7 illustrating a lock mechanism.
Fig. 9 is a partially enlarged cross-sectional view showing a modified example of a brake cylinder device.

Embodiments of the invention will now be described with reference to the drawings. Further, the invention is not limited to the embodiments described below and may be widely applied to a brake cylinder device including a parking spring brake mechanism used to park a vehicle and a brake device including the brake cylinder device.

An example will be described in which the brake cylinder device and the brake device of the present embodiment are applied to a railroad vehicle. Further, in the embodiment, an example case will be described in which the brake device is configured as a tread brake device. However, the present invention is not limited to such an application. That is, the present invention may be applied to a brake device other than the tread brake device such as a disk brake device.

### First Embodiment

### [Entire Configuration]

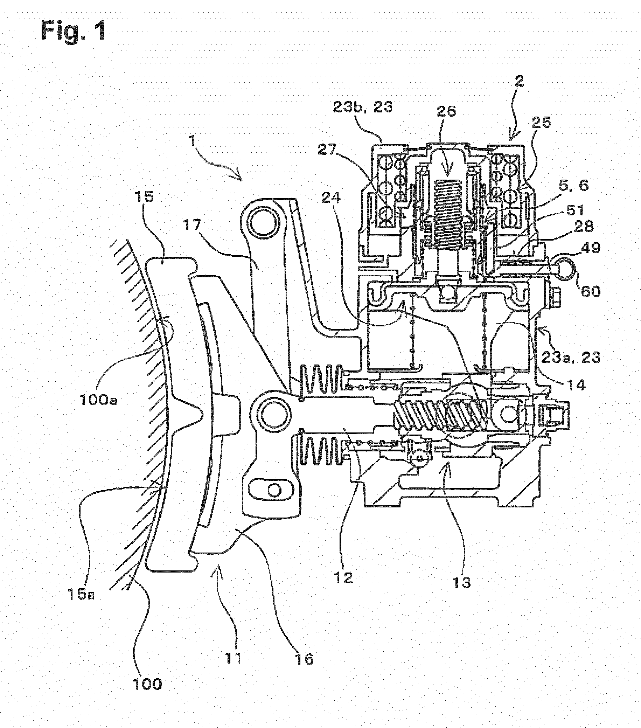

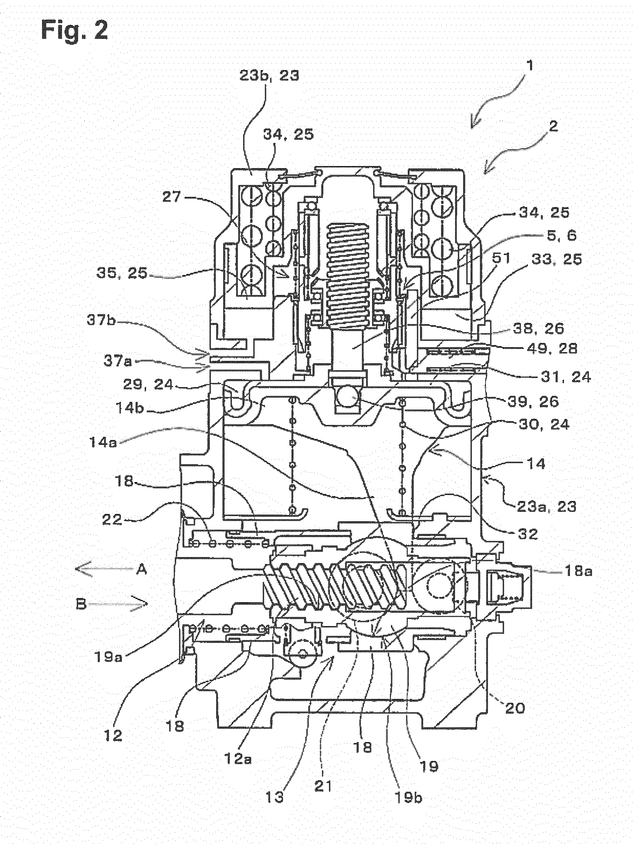

Fig. 1 is a partially cross-sectional view of a brake device 1 according to a first embodiment of the invention. Further, Fig. 2 is a partially enlarged view of the brake device 1 illustrated in Fig. 1 and shows a brake cylinder device 2 provided in the brake device 1. The brake device 1, which is illustrated in Figs. 1 and 2, is arranged in a vehicle (railroad vehicle of the embodiment) that serves as a braking subject (not illustrated). Further, Fig. 1 is a view illustrating the brake device 1 taken from the axle direction of a vehicle wheel 100 of the railroad vehicle when the brake device 1 is installed in a railroad vehicle. The brake device 1 is configured as a tread brake device.

As illustrated in Figs. 1 and 2, the brake device 1 includes the brake cylinder device 2, a brake output portion 11, a rod 12, a rod support mechanism 13, and the like. The brake device 1 outputs a brake force by actuating the brake cylinder device 2 so that the brake output portion 11, which is supported to be movable relative to the brake cylinder device 2, is driven through the rod 12.

Further, the rod 12 extends in a direction perpendicular to the axle direction of the vehicle wheel 100. The brake cylinder device 2 is arranged so that the axial direction of its cylinder body 23a and its cover 23b extends in a direction substantially orthogonal to the extension direction of the rod 12. In the present embodiment, the brake cylinder device 2 is arranged so that the axial direction of the cylinder body 23a and the cover 23b extends in the vertical direction of the railroad vehicle that is provided with the vehicle wheel 100.

The brake output portion 11 serves as a brake shoe, and the brake output portion 11 is driven in cooperation with the rod 12 so as to output a brake force. The brake output portion 11 includes a lining 15, a lining holding portion 16, and the like.

The lining 15 is provided with a brake surface 15a that is able to contact a tread 100a (pushed portion) of the vehicle wheel 100. When the brake output portion 11 is driven by the rod 12, the brake surface 15a of the lining 15 comes into contact with the tread 100a of the vehicle wheel 100 and is pushed against the tread 100a. Then, the rotation of the vehicle wheel 100 is stopped by the friction generated when the brake surface 15a is pushed against the tread 100a.

The lining holding portion 16 is fixed to the lining 15 serves as a member that holds the lining 15. Further, the lining holding portion 16 is pivotally connected to the distal end of the rod 12. The distal end of the rod 12 projects from the cylinder body 23a of the brake cylinder device 2. The lining holding portion 16 is also pivotally connected to a hanger member 17, which is pivotally connected to the cylinder body 23a.

The rod 12 serves as a shaft member that is driven when the brake cylinder device 2 is actuated to transmit the output of the brake cylinder device 2 to the brake output portion 11. The rod 12 moves in the direction the rod 12 projects from the cylinder body 23a (direction of arrow A in Fig. 2) when the actuated brake cylinder device 2 outputs the brake force. Accordingly, the rod 12 generates a brake force by pushing the lining 15 against the vehicle wheel 100. Further, the rod 12 moves in the direction the rod 12 is retracted in the cylinder body 23a (direction of the arrow B in Fig. 2) when the brake cylinder device 2 cancels the brake force. Thus, the rod 12 separates the lining 15 from the vehicle wheel 100 and cancels the brake force.

Further, the rod 12 moves in the direction of arrow A in Fig. 2 when a fluid brake mechanism 24 (described later) of the brake cylinder device 2 is actuated. The rod 12 is configured so that it can be biased when a parking spring brake mechanism 25 (described later) of the brake cylinder device 2 is biased. Further, in the brake cylinder device 2 of the present embodiment, the parking spring brake mechanism 25 is actuated during actuation of the fluid brake mechanism 24. When the parking spring brake mechanism 25 is first actuated, the rod 12 is continuously biased by the biasing force generated from the parking spring brake mechanism 25 regardless of whether or not the fluid brake mechanism 24 is actuated.

The rod support mechanism 13 is arranged in the cylinder body 23a. The rod support mechanism 13 serves as a mechanism that supports the rod 12 to be pivotal and movable relative to the cylinder body 23a. The rod support mechanism 13 includes an outer casing portion 18, an inner casing portion 19, a fixed roller 20, a movable roller 21, a return spring 22, and the like.

The outer casing portion 18 includes a tubular part, and in the present embodiment, is formed by joining two tubular members in series. The outer casing portion 18 accommodates the inner casing portion 19, the end of the rod 12 opposite to the distal end connected to the brake output portion 11, and the like. The outer casing portion 18 is supported by the cylinder body 23a to be slidable in a direction parallel to the axial direction of the rod 12. Further, the rod 12 is arranged to extend in a direction in which the axial direction of the rod 12 is substantially orthogonal to the axle direction of the vehicle wheel 100.

The inner casing portion 19 is accommodated in the outer casing portion 18. The inner casing portion 19 includes a threaded hole 19a having a wall including a threaded groove engaged with an outer threaded portion 12a provided in the outer surface of the rod 12 at the end opposite to the distal end. Further, the rod support mechanism 13 is provided with a position adjustment mechanism that changes the position of the rod 12 relative to the inner casing portion 19 by moving the threading position of the outer threaded portion 12a relative to the threaded hole 19a.

Further, the inner casing portion 19 is provided with a spherical outer curved surface 19b that forms part of a spherical surface. The outer casing portion 18 is provided with an inner curved surface 18a that is slidable relative to the outer curved surface 19b of the inner casing portion 19. The inner curved surface 18a is formed as a recessed spherical curved surface forming part of a spherical surface and is formed as a curved surface having a curvature corresponding to the curvature of the outer curved surface 19b. A spherical bearing is formed in the inner casing portion 19 and the outer casing portion 18 due to the sliding action by the outer curved surface 19b and the inner curved surface 18a. The spherical bearing supports the inner casing portion 19 to be pivotal relative to the outer casing portion 18 and supports the rod 12 to be pivotal relative to the cylinder body 23a.

The fixed roller 20 is configured as a tubular roller pivotally supported by the cylinder body 23a at a position fixed relative to the cylinder body 23a. For example, the fixed roller 20 is provided as a pair of fixed rollers located at two sides of the outer casing portion 18 in a direction orthogonal to the axial direction of the outer casing portion 18 that is a direction parallel to the axial direction of the rod 12.

The movable roller 21 is configured as a tubular roller that is rotationally supported by the wall of the outer casing portion 18. For example, the movable roller 21 is provided as a pair of movable rollers located at two sides of the outer casing portion 18 in a direction orthogonal to the axial direction of the outer casing portion 18. Each movable roller 21 is arranged so that the outer circumference of the movable roller 21 opposes the corresponding fixed roller 20 at a location separated from the fixed roller 20.

Further, the movable roller 21 is supported so as to be moveable relative to the cylinder body 23a when rotated and rolled. The cylinder body 23a is provided with a guide (not illustrated) that rolls the movable roller 21 in a direction substantially parallel to the axial direction of the rod 12. The movable roller 21 does not have to be rotationally supported by the outer casing portion 18. For example, the outer casing portion 18 may include an opening, and the 0 movable roller 21 may be rotationally supported by the inner casing portion 19 through the opening.

The return spring 22 serves as a coil spring including one end that contacts the inner step portion of the cylinder body 23a and another end that contacts the inner step portion of the outer casing portion 18. Then, the return spring 22 is arranged in a compressed state.

The return spring 22, which is arranged as described above, is configured to bias the outer casing portion 18 relative to the cylinder body 23a in a direction extending away from the vehicle wheel 100 (direction of the arrow B of Fig. 2) and in a direction substantially parallel to the axial direction of the rod 12. The return spring 22 biases the outer casing portion 18 in a direction extending away from the vehicle wheel 100. Thus, the inner casing portion 19 and the rod 12, which is engaged with the inner casing portion 19, are biased in the direction extending away from the vehicle wheel 100 together with the outer casing portion 18. The biasing force of the return spring 22 moves the rod 12 in a direction the rod 12 is retracted into the cylinder body 23a as a rod driving portion 14, which will be described later, moves when the brake cylinder device 2 cancels the brake force.

When a first piston 31 and the rod driving portion 14 move toward the rod support mechanism 13 when the brake cylinder device 2 is actuated to output a brake force, the fixed roller 20 and the movable roller 21 are operated as described below. Specifically, the fixed roller 20 rotates at the same position relative to the cylinder body 23a, and the movable roller 21 is biased toward the vehicle wheel 100 (in direction of arrow A in Fig. 2) as the rod driving portion 14 moves.

As a result, the movable roller 21 moves relative to the cylinder body 23a toward the vehicle wheel 100 as the movable roller 21 rotates and rolls on the cylinder body 23a. That is, the movable roller 21 is driven so that a gap between the fixed roller 20 and the movable roller 21 is increased by a wedge-shaped portion 14a of the rod driving portion 14 when the rod driving portion 14 moves. The outer casing portion 18, the inner casing portion 19, and the rod 12 move toward the vehicle wheel 100 together with the movable roller 21. Accordingly, the lining 15 of the brake output portion 11, which moves together with the rod 12, contacts the tread 100a of the vehicle wheel 100 and stops the rotation of the vehicle wheel 100.

### [Brake Cylinder Device]

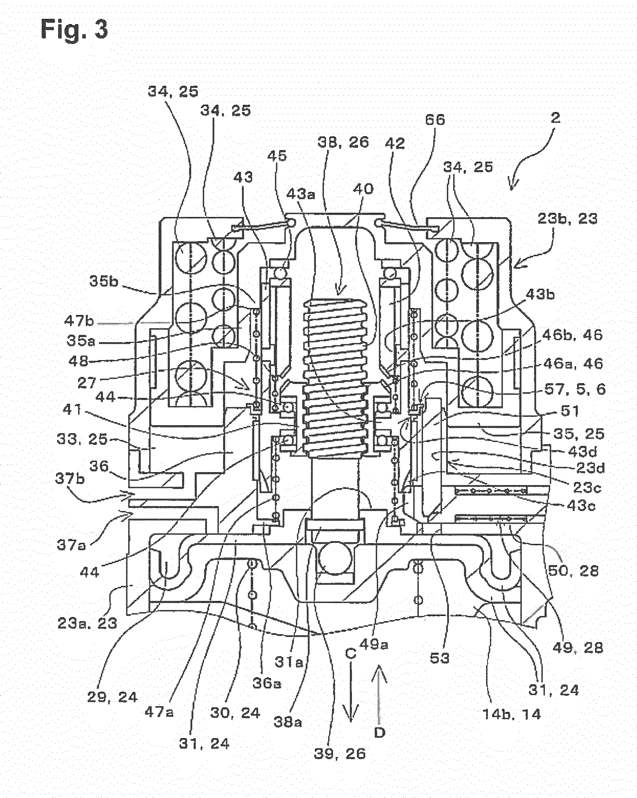

Next, the brake cylinder device 2 will be described in detail. Fig. 3 is a partially enlarged view of the brake cylinder device 2 illustrated in Fig. 2. The brake cylinder device 2 is arranged in the railroad vehicle and incorporated in the brake device 1. As illustrated in Figs. 1 and 2, the brake cylinder device 2 includes the rod driving portion 14, the cylinder 23, the fluid brake mechanism 24, the parking spring brake mechanism 25, a shaft portion 26, a transmission mechanism 27 (clutch mechanism), a lock mechanism 28, and the like. The mechanisms of the brake cylinder device 2 include main components formed by, for example, metal such as iron.

Further, in the present embodiment, the brake cylinder device 2 is actuated using compressed air that serves as a pressurized fluid. That is, the fluid brake mechanism 24 and the parking spring brake mechanism 25 are operated by the supply and the discharge of the compressed air, which serves as the pressurized fluid. The brake cylinder device 2 serves as a device in which the fluid brake mechanism 24 and the parking spring brake mechanism 25 can both be actuated.

The cylinder 23 includes the cylinder body 23a and the cover 23b. The cylinder body 23a includes a tubular portion that accommodates the fluid brake mechanism 24, the rod support mechanism 13, the rod driving portion 14, and the like. The cylinder body 23a is provided with the lock mechanism 28, the brake output portion 11, the rod 12, and the like. The cover 23b is fixed to the cylinder body 23a. Further, the cover 23b accommodates the parking spring brake mechanism 25, the shaft portion 26, the transmission mechanism 27, and the like.

The cylinder body 23a is fixed to, for example, a bogie of a railroad vehicle. Further, the axial direction of the cylinder body 23a and the cover 23b, the axial direction of a first piston 31 of the fluid brake mechanism 24 to be described later, the axial direction of a second piston 35 of the parking spring brake mechanism 25 (described later, and the axial direction of a spindle 38 of the shaft portion 26 (described later) conform to one another or are parallel to one another.

The cylinder body 23a includes a first port 37a and a second port 37b. The first port 37a is connected to a first compressed air supply source (not illustrated) that is a pressurized fluid supply source. The second port 37b is connected to a second compressed air supply source (not illustrated) that is a pressurized fluid supply source.

The compressed air (the pressurized fluid) supplied from the first compressed air supply source is supplied to the first port 37a through a brake controller (not illustrated) operated based on instructions from an upper-rank controller (not illustrated). The compressed air supplied from the first port 37a into the cylinder body 23a is discharged through the brake controller based on an instruction from the controller. Further, the compressed air (the pressurized fluid) from the second compressed air supply source is supplied to the second port 37b through a parking spring brake control electromagnetic valve (not illustrated) operated based on an instruction from the controller. The compressed air supplied from the second port 37b into the cylinder body 23a is discharged through the parking spring brake control electromagnetic valve based on an instruction from the controller.

The fluid brake mechanism 24 is operated by the supply and the discharge of the compressed air that serves as the pressurized fluid. The fluid brake mechanism 24 serves as a regular brake mechanism used to apply the brakes when driving the railroad vehicle. The fluid brake mechanism 24 includes a first pressure chamber 29, a first spring 30, the first piston 31, and the like.

The first pressure chamber 29 is formed inside the cylinder body 23a and defined by the first piston 31. The first pressure chamber 29, which is in communication with the first port 37a, receives the compressed air from the first compressed air supply source. Further, the compressed air supplied to the first pressure chamber 29 is discharged from the first port 37a.

The first spring 30 is arranged inside the cylinder body 23a in an area defined by the first piston 31 and is opposed to the first pressure chamber 29 with the first piston 31 located in between. In the present embodiment, the first spring 30 serves as a coil spring arranged inside the cylinder body 23a in a compressed state so as to bias the first piston 31. The first spring 30 has one end contacting the first piston 31 so as to bias the first piston 31. The other end of the first spring 30 is in contact with and supported by a spring receiving plate 32 fixed to the inner wall of the cylinder body 23a.

The first piston 31 is arranged so as to be movable back and forth inside the cylinder body 23a parallel to the axial direction and is arranged so as to be slidable on the inner wall of the cylinder body 23a. When the compressed air is supplied from the first port 37a to the first pressure chamber 29, the first piston 31 moves against the biasing force produced by the resiliency of the compressed first spring 30. Accordingly, the fluid brake mechanism 24 includes the first piston 31 on which the first pressure chamber 29 and the first spring 30 act from opposite sides. The first piston 31 is moved in a predetermined brake actuation direction (direction of the arrow C in Fig. 3) against the biasing force of the first spring 30 when the first pressure chamber 29 is supplied with compressed air.

Further, the rod driving portion 14 is fixed to the first piston 31 at the side opposite to the first pressure chamber 29. Accordingly, when the first piston 31 moves in the brake actuation direction, the rod driving portion 14 moves in the brake actuation direction together with the first piston 31. When the rod driving portion 14 moves in the brake actuation direction together with the first piston 31, the rod 12 is driven by the rod support mechanism 13. Accordingly, the brake force is output from the brake output portion 11 that is driven by the rod 12.

The rod driving portion 14 serves as a member (brake force transmission) that drives the rod 12 through the rod support mechanism 13 when the first piston 31 advances or retracts. The rod driving portion 14 is accommodated in the cylinder body 23a. The rod driving portion 14 serves as a wedge body including a wedge-shaped portion 14a having the shape of a wedge. Further, the rod driving portion 14 is fixed to the first piston 31 at a basal end 14b from which the wedge-shaped portion 14a projects.

The wedge-shaped portion 14a projects from the basal end 14b toward the rod support mechanism 13. The wedge-shaped portion 14a has the shape of a wedge so as to be tapered from the basal end 14b toward the rod support mechanism 13. The distal end of the wedge-shaped portion 14a, that is, the end of the wedge-shaped portion 14a opposite to the basal end 14b is inserted between the fixed roller 20 and the movable roller 21. Further, the distal end of the wedge-shaped portion 14a inserted between the fixed roller 20 and the movable roller 21 is arranged to contact the outer circumference of the fixed roller 20 and the outer circumference of the movable roller 21. The wedge-shaped portions 14a may be provided at a plurality of positions so as to correspond to combinations of the fixed roller 20 and the movable roller 21. Further, the wedge-shaped portion 14a may be provided at a single position so as to correspond to any one of a plurality of combinations of the fixed roller 20 and the movable roller 21.

When the first piston 31 and the rod driving portion 14 move toward the rod support mechanism 13 to output the brake force of the brake cylinder device 2, the fixed roller 20 contacting the wedge-shaped portion 14a rotates at the same position relative to the cylinder body 23a. The movable roller 21 contacting the wedge-shaped portion 14a is biased toward the vehicle wheel 100 (direction of arrow A in Fig. 2) by the wedge-shaped portion 14a when the rod driving portion 14 is moved.

The parking spring brake mechanism 25 serves as a parking brake mechanism used to keep the brakes applied when the railroad vehicle is parked. The parking spring brake mechanism 25 includes a second pressure chamber 33, a second spring 34 (parking spring), the second piston 35 (the piston), and the like.

The second pressure chamber 33 is formed inside the cover 23b and defined by the second piston 35. The second pressure chamber 33 communicates with the second port 37b, and receives compressed air from the second compressed air supply source. Further, the compressed air supplied to the second pressure chamber 33 is discharged from the second port 37b.

The second spring 34 is arranged inside the cover 23b in an area defined by the second piston 35 and is opposed to the second pressure chamber 33 with the second piston 35 located in between. In the present embodiment, the second spring 34 serves as a coil spring arranged inside the cover 23b in a compressed state so as to bias the second piston 35. One end of the second spring 34 is arranged in contact with and supported by the inner wall of the end of the cover 23b. Further, the other end of the second spring 34 is arranged in contact with the second piston 35 so as to bias the second piston 35. The present embodiment includes a plurality of (two) second springs 34. The plurality of second springs 34 are coaxially arranged about the same center axis. In this manner, the cover 23b accommodates the second springs 34, each of which is the parking spring, and the second piston 35, which is the parking piston.

The second piston 35 is movable back and forth inside the cover 23b in parallel to the axial direction and is slidable on the inner wall of the cover 23b. The second piston 35 is movable in the same direction as the first piston 31. The second piston 35 moves against the biasing force produced by the resiliency of the compressed second spring 34 so as to move in the brake release direction (direction of arrow D of Fig. 3), which is opposite to the brake actuation direction, when the compressed air is supplied from the second port 37b to the second pressure chamber 33. The second piston 35 is moved in a predetermined brake actuation direction (direction of arrow C in Fig. 3) by the biasing force of the second springs 34 when the compressed air supplied into the second pressure chamber 33 is discharged through the second port 37b.

As described above, the second piston 35 is arranged so that the second pressure chamber 33 and the second springs 34 act from opposite sides. The parking spring brake mechanism 25 is operated in a manner such that the second piston 35 biased by the biasing force of the second springs 34 moves in the brake actuation direction when the compressed air is switched from a state supplied to the second pressure chamber 33 to a state discharged from the second pressure chamber 33.

The end of the second piston 35 opposing the second pressure chamber 33 is annular and extends in the circumferential direction of the cover 23b. The cylinder body 23a includes an inner tubular portion 36 arranged at the inner side of the annular end of the second piston 35 and having a tubular shape extending in the circumferential direction. The annular end of the second piston 35 is arranged so as to slide on the inner wall of the cover 23b and to slide on the outer circumference of the inner tubular portion 36.

A tubular guide portion 23c is formed in the inner tubular portion 36 of the cylinder body 23a. The guide portion 23c is formed such that a through hole 23d axially extends through a circumferential part of the inner tubular portion 36. The through hole 23d has a circular cross-section that is perpendicular to its axis. The through hole 23d accommodates a substantially rod-shaped latch lock pin 51, which will be described later in detail. A release hole 53 is formed below the guide portion 23c in the cylinder body 23a. The release hole 53 is large enough to allow for insertion of the latch lock pin 51.

The shaft portion 26 includes the spindle 38, the bearing 39, and the like. The shaft portion 26 is connected to the first piston 31 at one end of the spindle 38 and is moved together with the first piston 31.

The spindle 38 projects in the brake release direction from the side of the rod driving portion 14 opposite to the side fixed to the first piston 31 projecting in the brake actuation direction. The spindle 38 serves as a shaft member formed separately from the first piston 31. The spindle 38 transmits the biasing force generated from the parking spring brake mechanism 25 to the first piston 31 together with the transmission mechanism 27, which will be described later.

Further, the spindle 38 is formed so that the end connected to the first piston 31 is provided with a projecting step portion 38a that extends along the outer circumference in the circumferential direction. A recessed portion is provided in the radially central portion of the first piston 31. A spindle holding portion 31a engaged with the step portion 38a is provided inside the recessed portion. When the first piston 31 moves in the brake actuation direction, the spindle holding portion 31a of the first piston 31 engages with the step portion 38a at the end of the spindle 38 to bias the spindle 38 in the brake actuation direction.

For example, the bearing 39 serves as a ball-shaped member and is configured to receive the thrust load acting on the spindle 38 and produced by the biasing force generated by the parking spring brake mechanism 25. The bearing 39 is arranged in the recessed portion, which is located in the central portion of the first piston 31, in contact with and between the end of the spindle 38 and the first piston 31. The biasing force generated by the parking spring brake mechanism 25 is transmitted to the first piston 31 through the transmission mechanism 27, the spindle 38, and the bearing 39.

The transmission mechanism 27 serves as a mechanism that transmits the biasing force of the second piston 35 of the parking spring brake mechanism 25 in the brake actuation direction to the shaft portion 26, which is moved together with the first piston 31. The transmission mechanism 27 includes a threaded portion 40, a clutch wheel 41, a clutch sleeve 42, a clutch box 43, and the like.

The transmission mechanism 27 is arranged at the inner side of the second piston 35 in the radial direction. The second piston 35 includes an inner tubular portion 35a at a radially inner side defining a tubular area in which the side opposite to the fluid brake mechanism 24 is closed to the outside. Part of the transmission mechanism 27 is arranged in the inner tubular area of the inner tubular portion 35a.

The threaded portion 40 serves as a male threaded portion formed on the outer circumference of the spindle 38 at a portion located at a side opposite to the first piston 31. The clutch wheel 41 serves as a tubular nut member engaged with the threaded portion 40 at a threaded portion formed in the inner circumference of the clutch wheel 41. The clutch wheel 41 is coaxial with the spindle 38 about the same axis. Further, the clutch wheel 41 is supported by two bearings 44 inside the tubular clutch box 43 and is rotatable relative to the clutch box 43. Accordingly, the clutch wheel 41 is configured to rotate relative to the spindle 38 and be movable relative to the spindle 38 while changing the position relative to the threaded portion 40 where the clutch wheel 41 is engaged when the spindle 38 and the clutch box 43 move relative to each other.

The clutch sleeve 42 is tubular and supported inside the clutch box 43 so as to be slidable on the clutch box 43 in a direction parallel to the axial direction of the spindle 38. The end of the clutch sleeve 42 in the brake actuation direction (end near the first piston 31) is arranged to oppose the end of the clutch wheel 41 in the brake release direction (end opposite to the first piston 31). The end of the clutch sleeve 42 in the brake release direction, that is, the end opposite to the clutch wheel 41 in the clutch sleeve 42 is supported by the end of the inner tubular portion 35a of the second piston 35 by a bearing 45 serving as a thrust bearing. The bearing 45 supports the end of the clutch sleeve 42 on the second piston 35 so as to be rotatable about the center axis of the spindle 38.

The clutch sleeve 42 and the clutch wheel 41 are provided with a rotation stopper mechanism 46 including teeth 46a and teeth 46b. The teeth 46a are formed on the end of the clutch wheel 41 opposing the clutch sleeve 42 and laid out throughout the entire end of the clutch wheel 41 in the circumferential direction. The teeth 46b are formed on the end of the clutch sleeve 42 opposing the clutch wheel 41 and laid out throughout the entire end of the clutch sleeve 42 in the circumferential direction. The teeth 46a and the teeth 46b are teeth shaped to engage each other when the end of the clutch wheel 41 and the end of the clutch sleeve 42 contact each other.

When the second piston 35 moves in the brake actuation direction relative to the spindle 38, the clutch sleeve 42 also moves together with the second piston 35 relative to the spindle 38. The clutch sleeve 42 contacts the clutch wheel 41, which is engaged with the spindle 38, and the teeth 46a engage the teeth 46b. The clutch sleeve 42 is movable only in the axial direction relative to the clutch box 43, and movement in the rotation direction is restricted. Thus, engagement of the teeth 46a with the teeth 46b restricts and stops rotation of the clutch wheel 41 relative to the clutch box 43.

The clutch box 43 is a tubular member that accommodates the threaded portion 40, the clutch wheel 41, and the clutch sleeve 42. The clutch box 43 is supported to be movable and slides on the inner circumference of the inner tubular portion 36 and the inner circumference of the inner tubular portion 35a in a direction parallel to the axial direction of the spindle 38. Further, the clutch box 43 is supported to be rotatable and slides on the inner circumference of the inner tubular portion 36 and the inner circumference of the inner tubular portion 35a in the circumferential direction when disengaged from a latch member 49 of the lock mechanism 28, which will be described later.

The clutch box 43 includes a step portion 43a extending along the inner circumference of the clutch box 43. Further, the clutch box 43 rotationally holds the clutch wheel 41 with two bearings 44 coupled to the step portion 43a. The clutch box 43 movably supports the clutch sleeve 42 in a direction parallel to the axial direction of the spindle 38. The end of the projection 43b projecting inward from the inner circumference of the clutch box 43 is slidably fitted to a groove formed in the outer circumference of the clutch sleeve 42 to guide the clutch sleeve 42 relative to the clutch box 43 in a slide direction. Further, the position of the clutch box 43 relative to the cylinder body 23a and the second piston 35 is adjusted by two position adjustment springs 47a and 47b that bias the clutch box 43 in the opposite direction. Further, a separation spring 48, which biases the teeth 46a and the teeth 46b in a separation direction, is provided between the end of the clutch sleeve 42 and the step portion 43a of the clutch box 43.

The position adjustment springs 47a and 47b include the first position adjustment spring 47a, which biases the clutch box 43 in the brake release direction (direction of arrow D in Fig. 3), and the second position adjustment spring 47b, which biases the clutch box 43 in the brake actuation direction (direction of arrow C in Fig. 3).

The first position adjustment spring 47a has one end that contacts an annular portion 36a extending inward from the inner circumferential portion of the inner tubular portion 36 in the brake actuation direction and another end that contacts the step portion 43a of the clutch box 43. Accordingly, the first position adjustment spring 47a biases the clutch box 43 toward the cylinder 23 in the brake release direction.

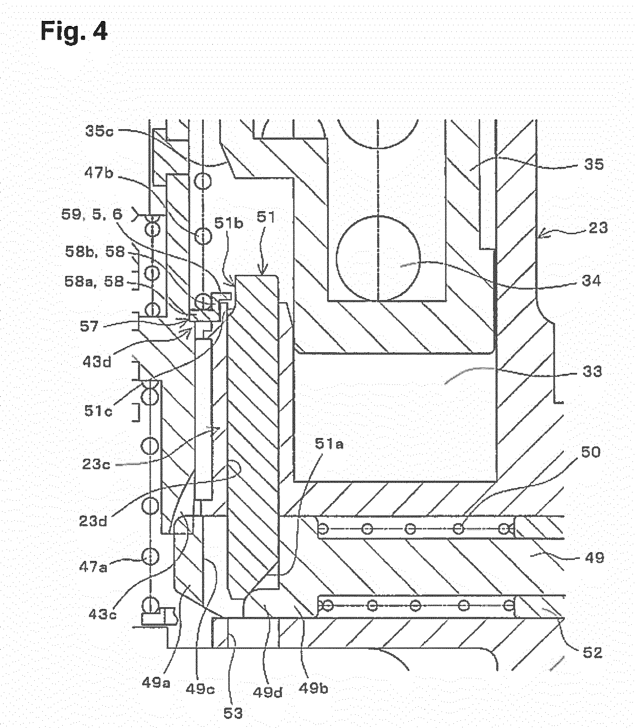

The second position adjustment spring 47b has one end that contacts a step portion 35b formed at the inner circumference of the inner tubular portion 35a and another end that contacts a spring seat 57 attached to a step portion 43d formed in the outer circumference of the clutch box 43. Accordingly, the second position adjustment spring 47b biases the clutch box 43 toward the second piston 35 in the brake actuation direction. In addition, the inner circumferential edge of the inner tubular portion 35a is provided with a chamfered portion 35c (see Fig. 4). The chamfered portion 35c is used to prevent the second position adjustment spring 47b from being broken or twisted when the second position adjustment spring 47b is buckled and caught by the inner circumferential edge of the inner tubular portion 35a.

Fig. 4 is a partially enlarged view of Fig. 3. As described above, the spring seat 57 is attached to the step portion 43d. The spring seat 57 includes a reception portion 58 and an extension portion 59 that are integrated with each other.

The reception portion 58 includes a ring portion 58a and an upright portion 58b. The inner circumferential edge of the ring portion 58a is ring-shaped and fitted to the step portion 43d. The upright portion 58b is short, tubular, and extends from the outer circumferential edge of the ring portion 58a in the brake release direction. The end of the second position adjustment spring 47b in the brake actuation direction contacts the surface of the reception portion 58 in the brake release direction. The extension portion 59 is flange-shaped and extends outward in the radial direction from the distal end of the upright portion 58b. Specifically, the extension portion 59 serves as a rotation restriction portion 5 and a separation restriction portion 6, which will be described later.

As illustrated in Fig. 1, the lock mechanism 28 includes the latch member 49, one end of which projects outward from the cylinder 23. In the lock mechanism 28, the other end (distal end) of the latch member 49 engages the clutch box 43 of the transmission mechanism 27 to restrict movement of the shaft portion 26 relative to the second piston 35 during actuation of the parking spring brake mechanism 25. Thus, the lock mechanism 28 serves as a mechanism that locks the shaft portion 26 during actuation of the parking spring brake mechanism 25. The lock mechanism 28 further includes a latch biasing spring 50, the latch lock pin 51 (latch lock member), and the like.

The latch member 49 is arranged so that its longitudinal axis extends in a direction orthogonal to the axial direction of the cylinder 23, namely, the radial direction of the cylinder 23. The latch member 49 is supported by the cylinder 23 so as to be slidable in the radial direction of the cylinder 23. The latch member 49 slides in the radial direction of the cylinder 23 and is switched between an advanced state, in which the latch member is advanced and moved toward the transmission mechanism 27 (in advancing direction), and a retracted state, in which the latch member is retracted and moved away from the transmission mechanism 27 (in retracting direction).

The latch member 49 is arranged so that the end in the retracting direction projects outward from the cylinder 23. Further, the end of the latch member 49 in the retracting direction is coupled to the cylinder 23 and supported by the separation restriction member 52 that restricts removal of the latch member 49 from the cylinder 23.

Further, the distal end of the latch member 49 in the advancing direction includes an engagement edge 49a that engages a latch edge 43c of the clutch box 43. The latch edge 43c serves as an edge that engages the engagement edge 49a of the latch member 49. More than one latch edge 43c is provided at multiple locations along the outer circumference of the clutch box 43 on the end in the brake actuation direction.

Further, the latch edge 43c and the engagement edge 49a are formed so that the tip of each edge extends in a direction parallel to the axial direction of the spindle 38. Engagement of the engagement edge 49a with any one of the latch edges 43c maintains a condition in which rotation of the clutch box 43 relative to the cylinder 23 is stopped. That is, the engagement of the latch edge 43c and the engagement edge 49a restricts rotation of the clutch box 43 about the center axis of the spindle 38 in the cylinder 23. Rotation of the clutch box 43 remains stopped as long as the latch edge 43c and the engagement edge 49a are not disengaged from each other.

The latch biasing spring 50 serves as a spring that biases the latch member 49 toward the inner side of the cylinder 23. The latch biasing spring 50 serves as a coil spring that is arranged around the latch member 49 and compressed in the longitudinal axis of the latch member 49 (advancing/retracting direction). The end of the latch biasing spring 50 in the advancing direction is arranged at the side of the latch member 49 in the advancing direction, and the end of the latch biasing spring in the retracting direction is arranged at the side of the latch member 49 in the retracting direction. More specifically, the end of the latch biasing spring 50 in the retracting direction is supported in contact with the separation restriction member 52, which is coupled to the cylinder 23. The end of the latch biasing spring 50 in the retracting direction is supported in contact with a step portion 49b of the latch member 49.

As described above, the latch biasing spring 50 is configured to bias the latch member 49 toward the clutch box 43 (in advancing direction) relative to the cylinder 23. That is, the latch biasing spring 50 is configured to bias the engagement edge 49a of the latch member 49 in a direction in which the engagement edge 49a engages the latch edge 43c of the clutch box 43.

Further, the end of the latch member 49 in the retracting direction includes a pull ring 60 (see Fig. 1) used to manually release the actuated parking spring brake mechanism 25. When the pull ring 60 is pulled out by an operator, the latch member 49 is pulled outward against the biasing force of the latch biasing spring 50. This disengages the engagement edge 49a from the latch edge 43c.

The latch lock pin 51 serves as a pin-shaped member and is accommodated in the through hole 23d of the guide portion 23c. Accordingly, the latch lock pin 51 is supported by the guide portion 23c so as to be slidable in a direction parallel to the axial direction of the spindle 38. In the present embodiment, the axial direction of the cylinder 23, the axial direction of the spindle 38, and the longitudinal axis of the latch lock pin 51 are set to extend in the vertical direction, that is, the upright direction. Further, the present invention is not limited in such a manner, and the axial direction of the cylinder 23, the axial direction of the spindle 38, and the longitudinal axis of the latch lock pin 51 may be set to extend in any direction.

The latch lock pin 51 has an end in the brake actuation direction, or a lower end, inserted into a through hole 49c of the latch member 49. The through hole 49c of the latch member 49 extends through the latch member 49 in a direction parallel to the axial direction of the spindle 38 at the advancing side of the latch member 49.

The latch member 49 includes a projected lifting portion 49d (projection) that projects in the advancing direction of the latch member 49 from a portion located at the retracting side in the wall of the through hole 49c. The end of the latch lock pin 51 in the brake actuation direction includes a tapered surface 51a (inclined portion) that widens in an inclined direction relative to the axial direction of the spindle 38. The latch member 49 is accommodated in the guide portion 23c so that the tapered surface 51a extends diagonally downward (downward in the retracting direction of latch member 49). That is, the tapered surface 51a is arranged inside the through hole 49c of the latch member 49 so as to be able to contact the lifting portion 49d.

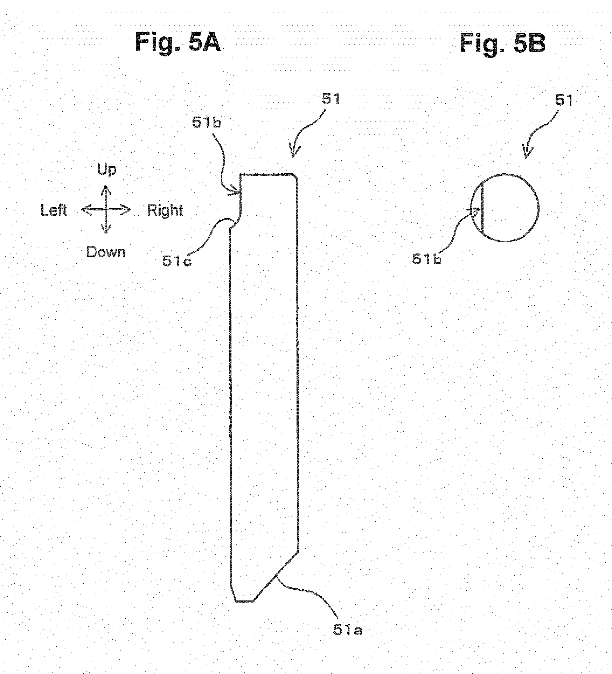

Fig. 5 is a diagram illustrating the shape of the latch lock pin 51, in which Fig. 5A is a front view and Fig. 5B is a top view. As illustrated in Figs. 5A and 5B, the latch lock pin 51 includes a notched portion 51b. The notched portion 51b is formed by cutting out the upper left portion as viewed in Fig. 5A. That is, the notched portion 51b is formed on the end of the latch lock pin 51 located at the opposite side in the axial direction (the brake actuation direction) of the tapered surface 51a and at the opposite side in the lateral direction (advancing direction of latch member 49 when latch lock pin 51 is accommodated in guide portion 23c) of the tapered surface 51a.

In the lock mechanism 28, the lifting portion 49d lifts the tapered surface 51a when the latch member 49 is biased by the latch biasing spring 50 and moved toward the clutch box 43 (when latch member 49 is advanced). In this case, the latch lock pin 51 is retracted from the latch member 49 in the retracting direction.

When the pull ring 60 is pulled, the latch member 49 moved away from the clutch box 43 (retracting direction) and retracted against the biasing force of the latch biasing spring 50. Consequently, the latch lock pin 51 falls over a predetermined distance and advances toward the latch member 49. Further, the lower end including the tapered surface 51a of the latch lock pin 51 is inserted into the release hole 53. The end of the latch lock pin 51 inserted into the release hole 53 is supported in contact with the first piston 31.

The latch lock pin 51 is arranged so that the end in the brake release direction, that is, the upper end, can contact a stepped annular end of the inner tubular portion 35a in the second piston 35 during actuation of the parking spring brake mechanism 25. The second spring 34 biases the second piston 35 when the parking spring brake mechanism 25 is actuated. Thus, the upper end of the latch lock pin 51 contacts the second piston 35 regardless of whether the lock mechanism 28 is in the lock state or the release state. The lock mechanism 28 is temporarily released after the parking spring brake mechanism 25 is actuated. Here, the upper end of the latch lock pin 51 contacts the second piston 35, and the lower end of the latch lock pin 51 is inserted into the release hole 53.

Accordingly, even when the pull ring 60 is released after the pull ring 60 is pulled to unlock the lock mechanism 28, the latch lock pin 51 is not pushed back in the upward direction. That is, upward lifting of the latch lock pin 51 is restricted even when the lifting portion 49d of the latch member 49 transmitting the biasing force of the latch biasing spring 50 biases the tapered surface 51a. Accordingly, the latch lock pin 51 restricts movement of the latch member 49 toward the clutch box 43. Further, engagement of the engagement edge 49a of the latch member 49 with the latch edge 43c of the clutch box 43 is restricted.

The transmission mechanism 27 and the lock mechanism 28 are configured as described above. Accordingly, when the parking spring brake mechanism 25 is actuated, the transmission mechanism 27 connects the spindle 38 and the second piston 35. That is, the second pressure chamber 33 is switched from a state supplied with compressed air to a state discharging the compressed air. This actuates the parking spring brake mechanism 25, and the biasing force of the second spring 34 moves the clutch sleeve 42 relative to the spindle 38 together with the second piston 35. When the second piston 35 moves relative to the spindle 38, the teeth 46b of the clutch sleeve 42 engages with the teeth 46a of the clutch wheel 41. This restricts rotation of the clutch wheel 41 and connects the spindle 38 and the second piston 35 to each other. The parking spring brake mechanism 25 is actuated when the fluid brake mechanism 24 is actuated. That is, when the first pressure chamber 29 is supplied with compressed air and the fluid brake mechanism 24 is actuated, the compressed air is discharged from the second pressure chamber 33. Further, the parking spring brake mechanism 25 is actuated.

As described above, when the parking spring brake mechanism 25 is actuated and the spindle 38 and the second piston 35 are connected to each other, the lock mechanism 28 is locked. This engages the latch member 49 of the lock mechanism 28 with the transmission mechanism 27. Accordingly, the lock mechanism 28 is configured to remain locked when movement of the spindle 38 relative to the second piston 35 is restricted during actuation of the parking spring brake mechanism 25.

More specifically, when the engagement edge 49a of the latch member 49, which is biased by the latch biasing spring 50, is engaged with the latch edge 43c of the clutch box 43, rotation of the clutch box 43 relative to the second piston 35 and the cylinder 23 is restricted. Further, the projection 43b of the clutch box 43 and the groove of the clutch sleeve 42 are engaged with each other. This restricts rotation of the clutch sleeve 42 relative to the clutch box 43. Further, the engagement of the teeth 46b and the teeth 46a restricts relative rotation of the clutch wheel 41 and the clutch sleeve 42 and restricts rotation of the spindle 38 relative to the clutch wheel 41.

In this manner, the lock mechanism 28 is configured to remain locked while restricting movement of the spindle 38 relative to the second piston 35 and actuating the parking spring brake mechanism 25 with the transmission mechanism 27.

### [Configuration of Rotation Restriction Portion and Separation Restriction Portion]

The brake cylinder device 2 in the first embodiment includes the rotation restriction portion 5. The rotation restriction portion 5 is used to restrict rotation of the latch lock pin 51 about the advancing/retracting direction of the latch lock pin 51 relative to the guide portion 23c. In the present embodiment, the rotation restriction portion 5 is configured by the extension portion 59 of the spring seat 57.

As described above, the extension portion 59 is formed in a flange-shaped and extends outward in the radial direction from the distal end of the upright portion 58b. As illustrated in Fig. 4, a slight radial gap is formed between the outer edge of the extension portion 59 and the notched portion 51b of the latch lock pin 51, which is accommodated in the guide portion 23c. Further, the surface of the extension portion 59 at the brake actuating side opposes a retracting side end of the latch lock pin 51, that is, a portion 51c exposed toward the retracting side of the notched portion 51b in the axial direction.

Further, the brake cylinder device 2 in the present embodiment includes the separation restriction portion 6. The separation restriction portion 6 is formed by the extension portion 59 like the rotation restriction portion 5. That is, in the present embodiment, the rotation restriction portion 5 and the separation restriction portion 6 are formed by the same component. The separation restriction portion 6 is used to restrict separation of the latch lock pin 51 from the guide portion 23c. The extension portion 59 that serves as the separation restriction portion 6 is arranged to overlap the latch lock pin 51 in the axial direction as illustrated in Fig. 4.

### [Operation of Device]

The operation of the brake device 1 and the brake cylinder device 2 will now be described. Fig. 1 illustrates the brake device 1 and the brake cylinder device 2 in a state when the fluid brake mechanism 24 and the parking spring brake mechanism 25 are both not actuated and are thus idle. Fig. 1 shows an example of a state in which a braking operation is not performed when the railroad vehicle is being driven. In this state, the brake controller (not illustrated) controls the first compressed air supply source (not illustrated) so that compressed air is not supplied through the brake controller and the first port 37a to the first pressure chamber 29. The compressed air inside the first pressure chamber 29 is spontaneously discharged through the brake controller and the first port 37a. Thus, the first piston 31 is biased in the brake release direction (direction of arrow D of Fig. 3) by the first spring 30 inside the cylinder body 23a so that the first piston 31 contacts the inner wall of the cylinder body 23a, that is, the wall portion defining the first pressure chamber 29.

In the state illustrated in Fig. 1, the compressed air is supplied from the second compressed air supply source (not illustrated) to the second pressure chamber 33 through the parking spring brake control electromagnetic valve and the second port 37b under the control of the parking spring brake control electromagnetic valve (not illustrated). Thus, the biasing force generated by the compressed air supplied to the second pressure chamber 33 moves the second piston 35 in the brake release direction against the biasing force of the second spring 34. In this state, a gap is formed between the teeth 46a of the clutch wheel 41 and the teeth 46b of the clutch sleeve 42 that are disengaged from each other.

The fluid brake mechanism 24 is actuated by the compressed air supplied from the first compressed air supply source to the first pressure chamber 29 through the first port 37a under the control of the brake controller. Here, the biasing force generated by the compressed air supplied to the first pressure chamber 29 moves the first piston 31 in the brake actuation direction (direction of arrow C in Fig. 3) against the biasing force of the first spring 30. This also moves the rod driving portion 14 in the brake actuation direction together with the first piston 31. Accordingly, the movable roller 21 is biased toward the vehicle wheel 100 as the wedge-shaped portion 14a of the rod driving portion 14 separates the movable roller 21 from the fixed roller 20. The outer casing portion 18, the inner casing portion 19, and the rod 12 move toward the vehicle wheel 100 together with the movable roller 21. Accordingly, the lining 15 of the brake output portion 11 that moves together with the rod 12 contacts the tread 100a of the vehicle wheel 100 and stops the rotation of the vehicle wheel 100.

Further, the spindle 38 also moves in the brake actuation direction together with the first piston 31 during the above-described actuation. However, the clutch wheel 41 is engaged with the threaded portion 40 of the spindle 38. When the spindle 38 moves in the brake actuation direction together with the first piston 31, the clutch wheel 41 is rotationally supported by the bearing 44 relative to the clutch box 43. Thus, the clutch wheel 41 rotates about the spindle 38 as the spindle 38 rotates in the brake actuation direction. This moves only the spindle 38 in the brake actuation direction.

The operation of the parking spring brake mechanism 25 will now be described. The parking spring brake mechanism 25 is activated when the fluid brake mechanism 24 is actuated and the railroad vehicle is completely stopped. The parking spring brake mechanism 25 is actuated during actuation of the fluid brake mechanism 24. More specifically, the actuation of the parking spring brake mechanism 25 is started when compressed air is supplied to the first pressure chamber 29 and the first piston 31 is biased in the brake actuation direction.

The parking spring brake mechanism 25 is actuated when compressed air is discharged from the second pressure chamber 33 through the second port 37b and the parking spring brake control electromagnetic valve under the control of the parking spring brake control electromagnetic valve. When the compressed air supplied to the second pressure chamber 33 is discharged through the second port 37b and the parking spring brake control electromagnetic valve, the biasing force of the second spring 34 moves the second piston 35 in the brake actuation direction. When the second piston 35 moves in the brake actuation direction, the clutch sleeve 42 also moves in the brake actuation direction together with the second piston 35. The clutch sleeve 42 contacts the clutch wheel 41, and the teeth 46a of the clutch wheel 41 engage the teeth 46b of the clutch sleeve 42.

In the above-described state, the engagement edge 49a of the latch member 49 engages the latch edge 43c of the clutch box 43. This restricts rotation of the clutch box 43 relative to the cylinder body 23a. Rotation of the clutch sleeve 42 relative to the clutch box 43 is also restricted. Thus, engagement of the teeth 46a with the teeth 46b restricts rotation of the clutch wheel 41 relative to the cylinder body 23a with the clutch box 43 and the clutch sleeve 42. This restricts rotation of the clutch wheel 41 and connects the spindle 38 to the second piston 35. In this state, the lock mechanism 28 locks the parking spring brake mechanism 25 locked in the lock state while remaining actuated. In the lock state, the rotation of the vehicle wheel 100 remains stopped, that is, the parking spring brake mechanism 25 remains actuated. When the parking spring brake mechanism 25 is temporarily actuated, compressed air is not supplied to the first pressure chamber 29, and compressed air is gradually discharged from the first pressure chamber 29.

The operation of the brake device 1 when the lock state of the lock mechanism 28 is released will now be described. The lock state of the lock mechanism 28 is released when, for example, slightly moving the railroad vehicle to a different parking position with a towing vehicle without cancelling the actuation of the parking spring brake mechanism 25 by supplying the compressed air to the second pressure chamber 33.

When the lock state is released, the operator draws the pull ring 60. Accordingly, since the engagement edge 49a of the latch member 49 is separated from the latch edge 43c of the clutch box 43, the engagement of the latch member 49 with respect to the clutch box 43 is released.

When the engagement edge 49a of the latch member 49 is disengaged from the latch edge 43c of the clutch box 43, the clutch box 43 is rotatable relative to the cylinder 23. That is, the clutch box 43, the clutch sleeve 42 engaged with the clutch box 43 at the projection 43b, and the clutch wheel 41 engaged with the clutch sleeve 42 by the teeth 46a and 46b are integrally rotatable relative to the cylinder 23.

When the clutch box 43, the clutch sleeve 42, and the clutch wheel 41 are rotatable relative to the cylinder 23, the spindle 38 and the second piston 35 are disconnected. That is, rotation of the spindle 38 relative to the second piston 35 is allowed. In the above-described state, compressed air is not supplied to the first pressure chamber 29. Thus, the spindle 38 is moved in the brake release direction together with the first piston 31 by the biasing force of the first spring 30 that biases the first piston 31. The clutch box 43, the clutch sleeve 42, and the clutch wheel 41 rotate relative to the cylinder 23 as the spindle 38 moves in the brake release direction. This allows the spindle 38 to move in the brake release direction.

As described above, the pull ring 60 is manually pulled to allow movement of the spindle 38 relative to the second piston 35 and release the parking spring brake mechanism 25 from the state locked by the lock mechanism 28. This manually releases the parking spring brake mechanism 25.

The latch member 49 is retracted when the lock state is released as described above. Thus, the lifting portion 49d of the latch member 49 is disengaged from the tapered surface 51a of the latch lock pin 51. Accordingly, the latch lock pin 51 falls into the through hole 49c of the latch member 49 and advances toward the latch member 49, and the distal end of the latch lock pin 51 is inserted into the release hole 53. Further, the second piston 35, which is biased by the second spring 34, advances in the brake actuation direction as the latch lock pin 51 advances so as to contact the retracting side surface of the latch lock pin 51. The second piston 35 pushes the latch lock pin 51 from the retracting side. Accordingly, it is possible to prevent the latch lock pin 51 from being pushed back upwardly even when the pull ring 60 is released.

### [Operation of Rotation Restriction Portion and Separation Restriction Portion]

In the brake cylinder device of patent document 1,the latch lock pin may be rotated or separated from the guide portion due to one reason or another. Specifically, for example, when the parking spring brake mechanism is arranged above the fluid brake mechanism due to limitations imposed by the available space, rotation or separation of the latch lock pin is apt to occur. In such a case, the tapered surface of the latch lock pin may not engage the lifting portion of the latch member, and the latch lock pin may fail to function normally.

More specifically, if the tapered surface does not engage with the lifting portion, for example, when returning the lock mechanism to the lock state again after the latch lock pin is fitted into the release hole, it may be difficult for the lifting portion to lift the latch lock pin.

In contrast, the brake cylinder device 2 in the present embodiment includes the rotation restriction portion 5 including the extension portion 59. In the rotation restriction portion 5, the outer edge of the extension portion 59 contacts the notched portion 51b of the latch lock pin 51. Thus, rotation of the latch lock pin 51 is restricted even when force acts to rotate the latch lock pin 51. This restricts rotation of the latch lock pin 51. As a result, for example, even when the latch lock pin 51 is separated from the guide portion 23c due to one reason or another, the tapered surface 51a properly engages the lifting portion 49d when the latch lock pin 51 is accommodated in the guide portion 23c again.

### [Effect]

As described above, the brake cylinder device 2 in the first embodiment includes the rotation restriction portion 5 that restricts rotation of the latch lock pin 51 about the advancing/retracting direction of the latch lock pin 51. This limits situations in which the latch lock pin 51 is rotated due to one reason or another such that the lifting portion 49d of the latch member 49 cannot engage the tapered surface 51a of the latch lock pin 51. Thus, situations in which the latch member 49 does not function normally are avoided.

The brake cylinder device 2 includes the separation restriction portion 6 as described above. This restricts rotation of the latch lock pin 51 that would occur when the latch lock pin 51 is separated from the guide portion 23c. Accordingly, normal operation of the latch member 49 is further ensured.

In the brake cylinder device 2, the extension portion 59, which serves as the separation restriction portion 6, is arranged overlapping the latch lock pin 51 in the advancing/retracting direction of the latch lock pin 51. This prevents the separation restriction portion 6 and the latch lock pin 51 from being arranged in series. Accordingly, the brake cylinder device 2 may be reduced in size in the advancing/retracting direction of the latch lock pin 51.

If, for example, a brake cylinder device includes a separation restriction portion in the second piston, the latch lock pin 51 may be pushed by the separation restriction portion when the second piston advances in the brake actuation direction. That is, the latch lock pin may be pushed when unnecessary.

In contrast, the brake cylinder device 2 uses the extension portion 59 of the spring seat 57, which receives the second position adjustment spring 47b, as the separation restriction portion 6. This avoids erroneous pushing of the latch lock pin 51 that would be caused depending on the advanced state of the second piston 35. Thus, in this configuration, the separation restriction portion 6 may be arranged at an appropriate location.

In the brake cylinder device 2, normal engagement of the latch member 49 and the latch lock pin 51 is ensured without significant changes in the shape of the brake cylinder device disclosed in, for example, patent document 1. More specifically, the brake cylinder device 2 can be obtained by partially changing the shapes of the latch lock pin 51 and the spring seat 57 in the brake cylinder device of patent document 1. There is no need to change the shape of relatively large components such as the cylinder 23. This reduces additional costs used to modify molds or the like.

Further, the brake device 1 ensures normal engagement of the latch lock pin 51 with the latch member 49.

### Second Embodiment

### [Entire Configuration]

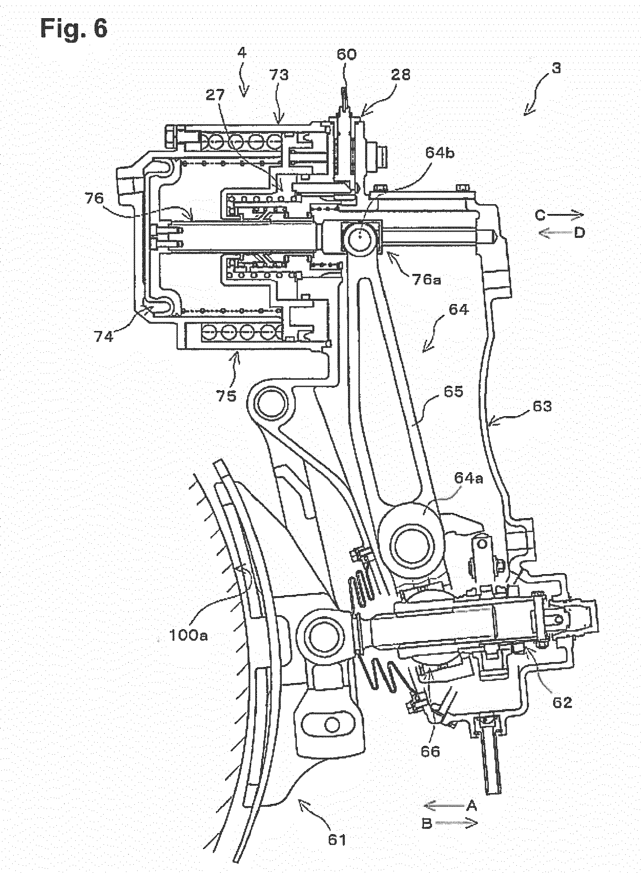

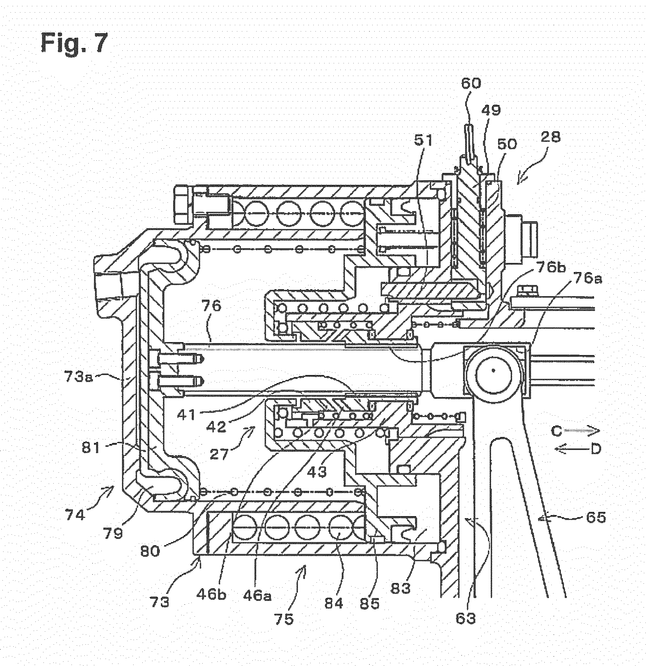

Fig. 6 is a partial cross-section view of a brake device 3 in a second embodiment. Fig. 7 is a diagram illustrating a brake cylinder device 4 of the brake device 3. Hatchings are not shown in Fig. 6. The brake device 3 in the second embodiment includes the brake cylinder device 4, a brake output portion 61, a rod 62, a brake lever 64, and the like. In the brake device 3, an arm portion 65 of the brake lever 64 pivots about a support point 64a when the brake cylinder device 4 is actuated. The brake output portion 61 is driven through a spherical bearing 66, which is located at the distal side of the arm portion 65, and the rod 62 to output a brake force.

### [Brake Cylinder Device]

The brake cylinder device 4 in the second embodiment includes a cylinder 73, a fluid brake mechanism 74, a parking spring brake mechanism 75, a spindle 76 (brake force transmission), the transmission mechanism 27 (the clutch mechanism), the lock mechanism 28, and the like. In the same manner as the brake cylinder device 2 in the first embodiment, the brake cylinder device 4 in the second embodiment is configured so that the fluid brake mechanism 74 and the parking spring brake mechanism 75 can both be actuated by supplying and discharging compressed air that serves as pressurized fluid.

The two brake mechanisms 74 and 75 of the brake cylinder device 4 in the second embodiment differ greatly in structure and positional relation from the brake cylinder device 2 in the first embodiment. More specifically, in the brake cylinder device 2 of the first embodiment, the two brake mechanisms 24 and 25 are arranged in series in the brake actuation direction, whereas in the brake cylinder device 4 of the second embodiment, the two brake mechanisms 74 and 75 are arranged overlapping each other in the brake actuation direction. More specifically, the overall length of brake cylinder device 4 in the second embodiment is decreased.

Hereinafter, the description will focus on portions that greatly different from the first embodiment (cylinder 73, fluid brake mechanism 74, parking spring brake mechanism 75, spindle 76, etc.). The remaining portions will not be described.

The cylinder 73, which is tubular and has a closed end, is formed by joining a plurality of members. A casing 63 that accommodates the rod 62 and the brake lever 64 is attached to the opening of the cylinder 73. The cylinder 73 accommodates the fluid brake mechanism 74, the parking spring brake mechanism 75, the spindle 76, the transmission mechanism 27, and the like.

The fluid brake mechanism 74 serves as a regular brake mechanism that applies brakes to the traveling railroad vehicle in the same manner as the first embodiment. The fluid brake mechanism 74 includes a first compression chamber 79, a first spring 80, a first piston 81, and the like.

The first compression chamber 79 is defined by the first piston 81 and a bottom portion 73a of the cylinder 73. The first spring 80 is arranged so that one end contacts a portion of the first piston 81 opposite to the first compression chamber 79 and the other end contacts a second piston 85. Accordingly, the first spring 80 biases the first piston 81 toward the second piston 85 in a direction opposite to the brake actuation direction (direction of arrow D in Fig. 7). The first piston 81 is accommodated in the cylinder 73 opposing the bottom portion 73a of the cylinder 73 such that first piston 81 is movable to advance and retract in the axial direction of the cylinder 73. The first piston 81 moves in the brake actuation direction (direction of arrow C of Fig. 7) against the biasing force produced by the resiliency of the first spring 30, which is compressed when compressed air is supplied to the first compression chamber 79. The spindle 76 arranged to be coaxial with the cylinder 73, which is fixed by a bolt to a surface of the first piston 81 at the brake actuation direction.

In the same manner as the first embodiment, the parking spring brake mechanism 75 serves as a parking brake mechanism used to keep the brakes applied to the parked railroad vehicle. The parking spring brake mechanism 75 includes a second compression chamber 83, a second spring 84, the second piston 85, and the like.

The second compression chamber 83 is defined by the second piston 85 and a portion covering the opening of the cylinder 73 in the casing 63. The second spring 84 is arranged so that one end contacts the cylinder 73 and the other end contacts the second piston 85. The second spring 84 biases the second piston 85 toward the cylinder 73 in the brake actuation direction (direction of arrow C in Fig. 7). The second piston 85 is accommodated in the cylinder 73 in an area located toward the brake actuation side from the first piston 81 so as to be movable to advance and retract in the axial direction of the cylinder 73.

The spindle 76 is a substantially rod-shaped member that extends in the brake actuation direction. The spindle 76 has one end (end in brake release direction) fixed to the first piston 81 and another end including an opening 76a. An effort portion 64b formed at one end of the arm portion 65 of the brake lever 64 is inserted in a slidable manner into the opening 76a. Further, a threaded portion 76b is formed in the outer circumferential surface of the spindle 76 at a portion near the opening 76a.

The spindle 76 is moved in the brake actuation direction (direction of arrow C of Fig. 6) when the brake cylinder device 4 is actuated to output the brake force. The effort portion 64b of the arm portion 65, which is slidably inserted into the opening 76a of the spindle 76, is also moved in the brake actuation direction. This moves the spherical bearing 66, which is located in the arm portion 65 at the side opposite to the effort portion 64b, in the direction of arrow A in Fig. 6. Thus, the brake force is generated from the brake output portion 61.

The transmission mechanism 27 serves as a mechanism that transmits the biasing force in the brake actuation direction of the second piston 85 in the parking spring brake mechanism 75 to the spindle 76. The transmission mechanism 27 includes the threaded portion 76b, the clutch wheel 41, the clutch sleeve 42, the clutch box 43, and the like. The transmission mechanism 27 is operated in the same manner as the first embodiment.

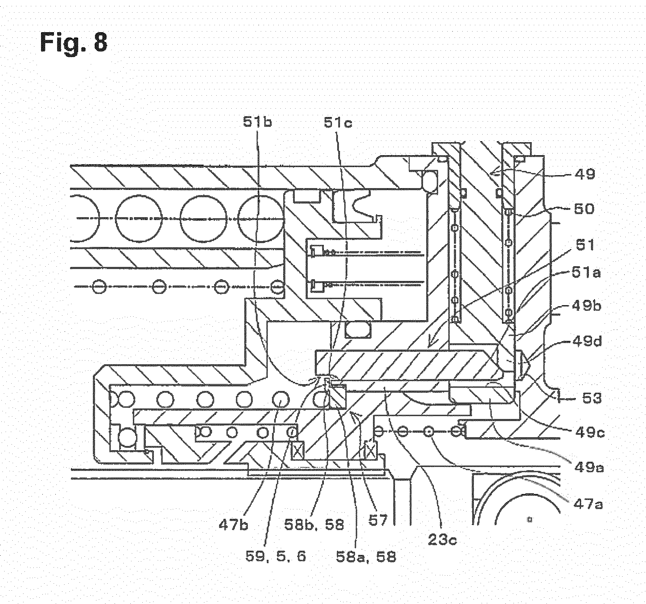

Fig. 8 is a partially enlarged view of Fig. 7 showing the lock mechanism 28. As illustrated in Figs. 7 and 8, the lock mechanism 28 includes the latch member 49, the latch biasing spring 50, the pull ring 60, and the latch lock pin 51 like in the first embodiment. The lock mechanism 28 is operated in the same manner as the first embodiment. [Rotation Restriction Portion and Separation Restriction Portion]

The brake cylinder device 4 in the second embodiment also includes the rotation restriction portion 5 and the separation restriction portion 6 that are formed by the extension portion 59 of the spring seat 57 like in the first embodiment In the same manner as the first embodiment, in the extension portion 59 that serves as the rotation restriction portion 5, the outer edge of the extension portion 59 contacts the notched portion 61b of the latch lock pin 51 even when force that rotates the latch lock pin 51 about the advancing/retracting direction of the latch lock pin 51 relative to the guide portion 23c acts on the latch lock pin 51. This restricts rotation of the latch lock pin 51. Further, in the same manner as the first embodiment, in the extension portion 59 that serves as the separation restriction portion 6, the latch lock pin 51 is caught by the extension portion 59 even when force that separates the latch lock pin 51 from the guide portion 23c acts on the latch lock pin 51. This restricts separation of the latch lock pin 51.

As described above, in the second embodiment, the brake device 3 and the brake cylinder device 4 restrict rotation and separation of the latch lock pin 51 like in the first embodiment. This ensures normal operation of the latch member 49.

### Modified Examples

First and second embodiments of the present invention have been described above. However, the present invention is not limited to the above-described embodiments and may be modified within the scope of the claims. For instance, the modified examples described below may be implemented.

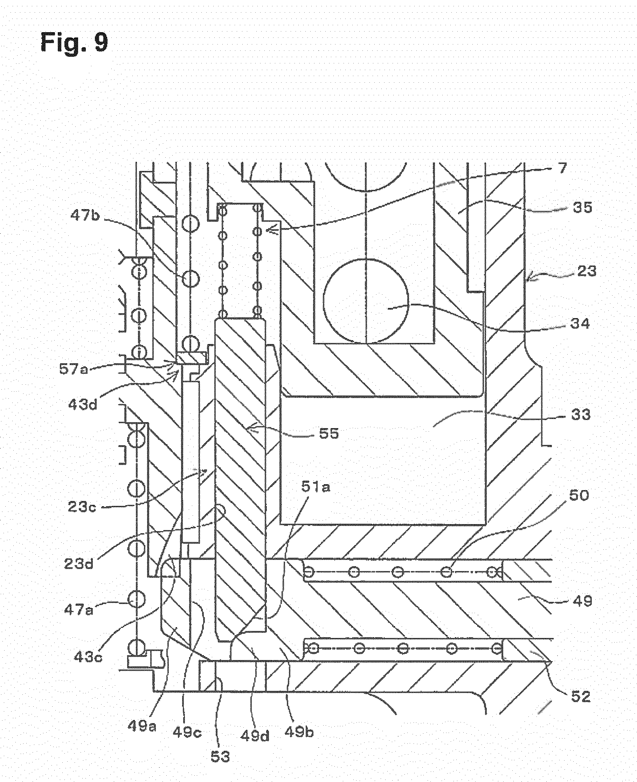

(1) Fig. 9 is a partially enlarged cross-sectional view showing a modified example of a brake cylinder device. The modified example differs from the above-described embodiments in that the extension portion 59 of the spring seat 57 and the notched portion 51b of the latch lock pin 51 are omitted. In the modified example, the rotation restriction portion and the separation restriction portion are formed by a coil spring 7.
   The coil spring 7 is arranged so that one end contacts the end of the second piston 35 at the brake actuation side and the other end contacts the latch lock pin 51. The length of the coil spring 7 is set so that the latch lock pin 51 is pushed in the brake actuation direction when the second piston inside the cylinder 23 is located at the furthermost position in the brake release direction. Accordingly, the latch lock pin 51 is biased in a direction that keeps the latch lock pin 51 in the guide portion 23c. This restricts rotation and separation of the latch lock pin 51.
(2) In the above-described embodiments, the rotation restriction portion 5 and the separation restriction portion 6 are both included in the brake cylinder devices 2 and 4. Instead, only the rotation restriction portion 5 may be included. For example, the latch lock pin 51 may include a groove portion that extends in the longitudinal axis of the latch lock pin 51, and the spring seat 57 may include a projection that projects into the groove portion and serves as the rotation restriction portion 5. Accordingly, the projection is caught by the groove portion of the latch lock pin 51 even when force acting to rotate the latch lock pin 51 acts on the latch lock pin 51. This restricts rotation of the latch lock pin 51. In addition, the projection may be formed in the guide portion 23c instead of the spring seat 57.
(3) In the above-described embodiments, the latch lock pin 51 is substantially rod-shaped, that is, has a circular cross-section perpendicular to the axis. However, the cross-section does not have to be circular and may be, for example, rectangular, polygonal, or oval. In such cases, the guide portion may be shaped accordingly. For example, when the latch lock pin has the formed of a polygonal rod, the guide portion may be tetragonal to allow of sliding of the polygonal latch lock pin. This restricts rotation of the latch lock pin with the guide portion serving as the rotation restriction portion.

### Industrial Applicability

The present invention may be widely applied to a brake cylinder device, which includes a parking spring brake mechanism used to park a vehicle, and a brake device, which includes the brake cylinder device.

### Description of Reference Characters

- 1, 3:: brake device
- 2, 4:: brake cylinder device
- 5:: rotation restriction portion
- 6:: separation restriction portion
- 7:: coil spring (rotation restriction portion, separation restriction portion)
- 11, 61:: brake output portion
- 14:: rod driving portion (brake force transmission)
- 23:: cylinder
- 23c:: guide portion
- 25:: parking spring brake mechanism
- 27, 77:: transmission mechanism (clutch mechanism)
- 34:: second spring (parking spring)
- 35:: second piston (piston)
- 49:: latch member
- 49d:: lifting portion (projection)
- 51:: latch lock pin (latch lock member)
- 51a:: tapered surface (inclined portion)
- 76:: spindle (brake force transmission)
- 100a:: tread (pushed portion)

## Claims

1. A brake cylinder device (2) comprising:
a parking spring brake mechanism (25) activated when parking a vehicle, wherein the parking spring brake mechanism (25) includes a cylinder, (23) a piston (35) accommodated in the cylinder (23), and a parking spring (34) that biases the piston (35) so that the piston (35) moves in a brake actuation direction;
a brake force transmission (14) that transmits the biasing force of the piston (35) to a brake output portion (11, 61), which pushes a pushed portion (100a) of a braking subject;
a clutch mechanism (27, 77) configured to transmit the biasing force of the piston (35) to the brake force transmission (14) or interrupt the transmission of the biasing force of the piston (35) to the brake force transmission (14);
a latch member (49) configured so that a distal end of the latch member (49) is engaged with the clutch mechanism (27, 77) when the latch member (49) is in an advanced state advanced toward the clutch mechanism (27, 77) and so that the distal end is disengaged from the clutch mechanism (27, 77) when the latch member (49) is in a retracted state retracted from the clutch mechanism (27, 77), wherein the latch member (49) restricts displacement of the brake force transmission (14) relative to the piston (35) in the advanced state when the parking spring brake mechanism (25) is activated and permits displacement of the brake force transmission (14) relative to the piston (35) in the retracted state when the parking spring brake mechanism (25) is activated;
a latch lock member (51) that includes an inclined portion (51a) arranged to contact a distal end of a projection formed on the latch member (49) projecting in an advancing direction of the latch member (49), wherein the latch lock member (51) advances in the brake actuation direction when the latch member (49) shifts to the retracted state and pushes the latch member (49) in a retracting direction of the latch member (49) with the inclined portion (51a);
a guide portion (23c) that guides the latch lock member (51) and allows the latch lock member (51) to advance and retract; **characterised by**
a rotation restriction portion (5) that restricts rotation of the latch lock member (51) about the advancing/retracting direction of the latch lock member (51) relative to the guide portion (23c).

2. The brake cylinder device (2) according to claim 1, further comprising:
a separation restriction portion (6) that restricts separation of the latch lock member (51) from the guide portion (23c).

3. The brake cylinder device (2) according to claim 2, wherein the separation restriction portion (6) is arranged to overlap the latch lock member (51) in the advancing/retracting direction of the latch lock member (51).

4. The brake cylinder device according to claim 2 or 3, further comprising:
a first position adjustment spring (47a) that biases the clutch mechanism (27, 77) relative to the cylinder (23) in a direction opposite to the brake actuation direction;
a second position adjustment spring (47b) that biases the clutch mechanism (27, 77) relative to the piston (35) in the brake actuation direction; and
a spring seat (57) that includes a reception portion (58), which receives an end of the second position adjustment spring (47b) at a side biasing the clutch mechanism (27, 77), and an extension portion (59), which serves as the separation restriction portion (6) and extends from the reception portion (58) opposing an end of the latch lock member (51) at a retracting direction side.

5. A brake device (1) comprising:
the brake cylinder device (2) according to any one of claims 1 to 4; and
a brake output portion (11) that pushes a pushed portion of a braking subject with the biasing force of the piston (35) of the brake cylinder device (2).

## Patentansprüche

1. Bremszylinder-Vorrichtung (2), die umfasst:
einen Federspeicherbrems-Mechanismus (25), der beim Parken eines Fahrzeugs aktiviert wird, wobei der Federspeicherbrems-Mechanismus (25) einen Zylinder (23), einen Kolben (35), der in dem Zylinder (23) aufgenommen ist, sowie eine Park-Bremsfeder (34) umfasst, die den Kolben (35) so vorspannt, dass sich der Kolben (35) in einer Bremsbetätigungs-Richtung bewegt;
eine Bremskraft-Übertragungseinrichtung (14), die die Vorspannkraft des Kolbens (35) auf einen Brems-Ausgangsabschnitt (11, 61) überträgt, der auf einen gedrückten Abschnitt (100a) eines Brems-Objekts drückt;
einen Kupplungs-Mechanismus (27, 77), der so ausgeführt ist, dass er die Vorspannkraft des Kolbens (35) auf die Bremskraft-Übertragungseinrichtung(14) überträgt oder die Übertragung der Vorspannkraft des Kolbens (35) auf die Bremskraft-Übertragungseinrichtung (14) unterbricht;
ein Sperren-Element (49), das so ausgeführt ist, dass ein distales Ende des Sperren-Elementes (49) mit dem Kupplungs-Mechanismus (27, 77) in Eingriff ist, wenn sich das Sperren-Element (49) in einem ausgefahrenen Zustand befindet und auf den Kupplungs-Mechanismus (27, 77) zu ausgefahren ist, und so, dass das distale Ende von dem Kupplungs-Mechanismus (27, 77) gelöst wird, wenn sich das Sperren-Element (49) in einem eingefahrenen Zustand befindet und von dem Kupplungs-Mechanismus (27, 77) aus eingefahren ist, wobei das Sperren-Element (49) Verschiebung der Bremskraft-Übertragungseinrichtung (14) relativ zu dem Kolben (35) in dem ausgefahrenen Zustand einschränkt, wenn der Federspeicherbrems-Mechanismus (25) aktiviert wird, und Verschiebung der Bremskraft-Übertragungseinrichtung (14) relativ zu dem Kolben (35) in dem eingefahrenen Zustand zulässt, wenn der Federspeicherbrems-Mechanismus (25) aktiviert wird;
ein Sperren-Arretierelement (51), das einen geneigten Abschnitt (51a) einschließt, der so angeordnet ist, dass er mit einem distalen Ende eines Vorsprungs in Kontakt kommt, der an dem Sperren-Element (49) ausgebildet ist und in einer Ausfahr-Richtung des Sperren-Elementes (49) vorsteht, wobei das Sperren-Arretierelement (51) in der Bremsbetätigungs-richtung ausfährt, wenn das Sperren-Element (49) in den eingefahrenen Zustand übergeht, und das Sperren-Element (49) mit dem geneigten Abschnitt (51a) in eine Einfahr-Richtung des Sperren-Elementes (49) drückt;
einen Führungsabschnitt (23c), der das Sperren-Arretierelement (51) führt und zulässt, dass das Sperren-Arretierelement (51) ausfährt und einfährt; **gekennzeichnet durch**
einen Drehungs-Einschränkungsabschnitt (5), der Drehung des Sperren-Arretierelementes (51) um die Ausfahr/Einfahr-Richtung des Sperren-Arretierelementes (51) herum relativ zu dem Führungsabschnitt (23c) einschränkt.

2. Bremszylinder-Vorrichtung (2) nach Anspruch 1, die des Weiteren umfasst:
einen Trennungs-Einschränkungsabschnitt (6), der Trennung des Sperren-Arretierelementes (51) von dem Führungsabschnitt (23c) einschränkt.

3. Bremszylindervorrichtung (2) nach Anspruch 2, wobei der Trennungs-Einschränkungsabschnitt (6) so angeordnet ist, dass er das Sperren-Arretierelement (51) in der Ausfahr/Einfahr-Richtung des Sperren-Arretierelementes (51) überlappt.

4. Bremszylinder-Vorrichtung nach Anspruch 2 oder 3, die des Weiteren umfasst:
eine erste Positions-Einstellfeder (47a), die den Kupplungs-Mechanismus (27, 77) relativ zu dem Zylinder (23) in einer Richtung entgegengesetzt zu der Bremsbetätigungs-Richtung vorspannt;
eine zweite Positions-Einstellfeder (47a), die den Kupplungs-Mechanismus (27, 77) relativ zu dem Kolben (35) in der Bremsbetätigungs-Richtung vorspannt; sowie eine Federauflage (57), die einen Aufnahmeabschnitt (58), der ein Ende der zweiten Positions-Einstellfeder (47b) an einer Seite aufnimmt, an der der Kupplungs-Mechanismus (27, 77) vorgespannt wird, sowie einen Verlängerungsabschnitt (59) einschließt, der als der Trennungs-Einschränkungsabschnitt (6) dient und sich von dem Aufnahmeabschnitt (58) einem Ende des Sperren-Arretierelementes (51) an einer Seite in der Einfahr-Richtung gegenüberliegend erstreckt.

5. Bremsvorrichtung (1), die umfasst:
die Bremszylinder-Vorrichtung (2) nach einem der Ansprüche 1 bis 4; sowie
einen Brems-Ausgangsabschnitt (11), der mit der Vorspannkraft des Kolbens (35) der Bremszylinder-Vorrichtung (2) auf einen gedrückten Abschnitt eines Brems-Objektes drückt.

## Revendications

1. Dispositif de cylindre de frein (2) comprenant :
un mécanisme de frein à ressort de stationnement (25) activé lors du stationnement d'un véhicule, dans lequel le mécanisme de frein à ressort de stationnement (25) comprend un cylindre (23), un piston (35) logé dans le cylindre (23), et un ressort de stationnement (34) qui sollicite le piston (35) de sorte que le piston (35) se déplace dans une direction d'actionnement de frein ;
une transmission de force de freinage (14) qui transmet la force de sollicitation du piston (35) à une partie de sortie de freinage (11, 61), qui pousse une partie poussée (100a) d'un sujet de freinage ;
un mécanisme d'embrayage (27, 77) configuré pour transmettre la force de sollicitation du piston (35) à la transmission de force de freinage (14) ou interrompre la transmission de la force de sollicitation du piston (35) à la transmission de force de freinage (14) ;
un élément de verrouillage (49) configuré de telle sorte qu'une extrémité distale de l'élément de verrouillage (49) est mise en prise avec le mécanisme d'embrayage (27, 77) lorsque l'élément de verrouillage (49) est dans un état avancé où il est avancé vers le mécanisme d'embrayage (27, 77) et de sorte que l'extrémité distale est libérée du mécanisme d'embrayage (27, 77) lorsque l'élément de verrouillage (49) est dans un état rétracté où il est rétracté du mécanisme d'embrayage (27, 77), dans lequel l'élément de verrouillage (49) restreint un déplacement de la transmission de force de freinage (14) par rapport au piston (35) à l'état avancé lorsque le mécanisme de frein à ressort de stationnement (25) est activé et permet un déplacement de la transmission de force de freinage (14) par rapport au piston (35) à l'état rétracté lorsque le mécanisme de frein à ressort de stationnement (25) est activé ;
un élément de blocage de verrouillage (51) qui comprend une partie inclinée (51a) agencée pour contacter une extrémité distale d'une saillie formée sur l'élément de verrouillage (49) faisant saillie dans une direction d'avancée de l'élément de verrouillage (49), dans lequel l'élément de blocage de verrouillage (51) avance dans la direction d'actionnement de frein lorsque l'élément de verrouillage (49) passe à l'état rétracté et pousse l'élément de verrouillage (49) dans une direction de rétraction de l'élément de verrouillage (49) avec la partie inclinée (51a) ;
une partie de guidage (23c) qui guide l'élément de blocage de verrouillage (51) et permet à l'élément de blocage de verrouillage (51) d'avancer et se rétracter; **caractérisé par**
une partie de restriction de rotation (5) qui restreint une rotation de l'élément de blocage de verrouillage (51) autour de la direction d'avancée/rétraction de l'élément de blocage de verrouillage (51) par rapport à la partie de guidage (23c).

2. Dispositif de cylindre de frein (2) selon la revendication 1, comprenant en outre :
une partie de restriction de séparation (6) qui restreint une séparation de l'élément de blocage de verrouillage (51) depuis la partie de guidage (23c).

3. Dispositif de cylindre de frein (2) selon la revendication 2, dans lequel la partie de restriction de séparation (6) est agencée pour chevaucher l'élément de blocage de verrouillage (51) dans la direction d'avancée/rétraction de l'élément de blocage de verrouillage (51).

4. Dispositif de cylindre de frein selon la revendication 2 ou 3, comprenant en outre :
un premier ressort d'ajustement de position (47a) qui sollicite le mécanisme d'embrayage (27, 77) par rapport au cylindre (23) dans une direction opposée à la direction d'actionnement de frein ;
un second ressort d'ajustement de position (47b) qui sollicite le mécanisme d'embrayage (27, 77) par rapport au piston (35) dans la direction d'actionnement de frein ; et
un siège de ressort (57) qui comprend une partie de réception (58), qui reçoit une extrémité du second ressort d'ajustement de position (47b) sur un côté sollicitant le mécanisme d'embrayage (27, 77), et une partie d'extension (59), qui sert en tant que la partie de restriction de séparation (6) et s'étend depuis la partie de réception (58) opposée à une extrémité de l'élément de blocage de verrouillage (51) sur un côté de direction de rétraction.

5. Dispositif de frein (1) comprenant :
le dispositif de cylindre de frein (2) selon l'une quelconque des revendications 1 à 4 ; et
une partie de sortie de freinage (11) qui pousse une partie poussée d'un sujet de freinage avec la force de sollicitation du piston (35) du dispositif de cylindre de frein (2).
